(19) **Europäisches Patentamt**
**European Patent Office**
**Office européen des brevets**

(11) **EP 3 696 765 B1**

(12) **EUROPEAN PATENT SPECIFICATION**

(45) Date of publication and mention
of the grant of the patent:
**18.03.2026 Bulletin 2026/12**

(21) Application number: **20157799.6**

(22) Date of filing: **17.02.2020**

(51) International Patent Classification (IPC):
***G06Q 50/06*** (2024.01)

(52) Cooperative Patent Classification (CPC):
**G06Q 50/06;** Y02A 30/00; Y02B 10/30; Y02B 70/30;
Y02B 70/3225; Y02E 40/70; Y04S 10/50;
Y04S 20/222; Y04S 20/244

(54) **METHOD FOR IMPROVING THE PERFORMANCE OF THE ENERGY MANAGEMENT IN A NEARLY ZERO ENERGY BUILDING AND SYSTEM THEREFOR**

VERFAHREN ZUR VERBESSERUNG DER LEISTUNG DER ENERGIEVERWALTUNG IN EINEM NIEDRIGSTENERGIEGEBÄUDE UND SYSTEM DAFÜR

PROCÉDÉ POUR AMÉLIORER LA PERFORMANCE DE LA GESTION D'ÉNERGIE DANS UN BÂTIMENT À CONSOMMATION D'ÉNERGIE QUASI NULLE ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2019 GR 20190100088**

(43) Date of publication of application:
**19.08.2020 Bulletin 2020/34**

(73) Proprietor: **Aristotle University of Thessaloniki - Elke**
**54636 Thessaloniki (GR)**

(72) Inventors:
• **MADEMLIS, Christos**
**55134 Kalamaria , Thessaloniki (GR)**

• **JABBOUR, Nikolaos**
**57001 Nea Raidestos, Thermi (GR)**
• **TSIOUMAS, Evangelos**
**54639 Thessaloniki (GR)**

(74) Representative: **Petsis, Christos**
**4-6, Kyparissias**
**542 49 Thessaloniki (GR)**

(56) References cited:
• **BABU K RUSHIKESH ET AL: "Implementation of net zero energy building (NZEB) prototype with renewable energy integration", 2017 IEEE REGION 10 SYMPOSIUM (TENSYMP), IEEE, 14 July 2017 (2017-07-14), pages 1 - 5, XP033227370, DOI: 10.1109/TENCONSPRING.2017.8069994**

**Description**

**Field of the invention**

The present invention relates to a method for the optimal energy management of a nearly zero energy building that is based on a genetic algorithm technique which is able to provide an optimal balance between the objectives of energy saving, comfort of the building residents and maximum exploitation of the generated electric energy by renewable energy sources such as wind turbines and photovoltaics through the proper utilization of a battery storage system.

**Background of the invention**

The nearly zero energy buildings designated hereafter as nZEBs are high energy efficient buildings where the required energy is given by renewable energy sources -designated hereafter as RES- provided onsite or nearby. The RES and the energy storage systems of a nZEB can be of any type.

The most important factors that may affect the performance of the energy management in a nZEB are the electric energy generated by the RES, the electric energy consumed by the appliances that are considered as electric loads, the user preferences, the state-of-charge -designated hereafter as SoC- and the energy price of the BSS, the weather forecast, the real-time electricity price, and the nZEB's construction characteristics. If the energy management system -designated hereafter as EMS- considers only the comfort level of the residents, then the electric energy absorbed by the grid may be increased that may result in a decrease of the energy autonomy level of the nZEB and an increase of the electricity bills, whereas if it is aimed only the reduction of the electric energy absorbed by the grid, the residents' comfort may be adversely affected. Thus, the EMS should provide a correct balance between the above objectives. Moreover, it should be simple in the implementation and accurate in its actions, so as it can satisfactorily follow the fluctuations of the RES power generation and the consumption of the nZEB appliances.

**Prior Art**

To address the challenges of improving the energy management in nZEBs, several techniques have been proposed. In CN 106439993 of 22 February 2017, the solar energy is utilized in conjunction with a heat pump to provide heating and hot domestic water in the building. This technique utilizes RES with heat pump, but it does not manage the operation of electric loads of the building.

US 20170167747A1 of 15 June 2017 aims to improve the energy saving in a building by a system and a method that controls the heating/cooling system. In US 20170176964A1 of 22 June 2017, a system and a method have been developed that estimate the number of people that are in a building. In WO2013163202A1 of 31 October 2013, a technique for monitoring and managing the electric and electromechanical system of a building has been presented.

In US20130238294A1 of 12 September 2013, a method for increasing the energy saving in energy buildings has been presented; however, it does not consider the comfort of the residents. In WO2015084285A1 of 11 June 2015, an energy management technique is disclosed that aims to improve the performance of a building by considering the residents' comfort. The proposed control unit is based on controlling the operation of the appliances by categorizing them in three basic modes, i.e. economy, comfort and empty house mode. However, it does not provide the optimal balance between the objectives of building performance and residents' comfort.

A building manager that includes a communications interface configured to receive information from a smart energy grid is disclosed in US 20160334825A1 of 17 November 2016. The control layer includes several control algorithms modules configured to process the inputs and determine the outputs. However, the energy management does not utilize a control method with an optimal cost function that can provide the optimal solution.

An energy optimization system with economic load demand response optimization for buildings is disclosed in EP3413421A1 of 12 December 2018; however, it refers only to the heating, ventilating and air-conditioning (HVAC) equipment. Also, an energy system with load balancing has been presented in EP3457513A1 of 20 March 2019; however, the energy management system does not consider the residents' comfort and preferences for the usage of the electric loads.

Several control methods have been presented that aim to improve the energy management of a nZEB. Specifically, an EMS that can minimize the heating cost by programming the thermal appliances in a building has been presented in A. Molderink, et al., "Domestic energy management methodology for optimizing efficiency in smart grids," in Proc. IEEE Conf. Power Technol., Bucharest, Jun. 2009. Also, an optimal control algorithm that considers the level of residents' comfort and aims to the cost minimization has been proposed in A. Mohsenian-Rad et al., "Optimal residential load control with price prediction in real-time electricity pricing environments," IEEE Trans. Smart Grid, vol. 1, no. 2, pp. 120-133, 2010. However, the above techniques do not consider the impact of the RES in the building performance.

For the development of EMS for buildings, several control methods have been proposed. Specifically, the Giusti, et al., "Restricted neighborhood communication improves decentralized demand-side load management," IEEE Trans. Smart Grid, vol. 5, no. 1, pp. 92-101, 2014 utilizes the integer linear programming technique. The A.H. Mohsenian-Rad, et al., "Autonomous demand-side management based on game-theoretic energy consumption scheduling for the future smart grid," IEEE Trans. Smart Grid, vol. 1, no. 3, pp. 320-331, 2010 uses the game theory. The P. Chavali, et al., "A distributed algorithm of appliance scheduling for home management system," IEEE Trans. Smart Grid, vol. 5, no. 1, pp. 282-290, 2014 uses the distributed algorithm method for appliance scheduling. The B. Sun, et al., "Building Energy Management: Integrated Control of Active and Passive Heating, Cooling, Lighting, Shading, and Ventilation Systems," IEEE Trans. on Autom. Science and Eng., vol. 10, no. 3, pp. 588-602, 2013 utilizes the stochastic dynamic programming technique.

Several techniques have been proposed to manage the energy of a building through genetic algorithms, such as Z. Zhao, et al. "An optimal power scheduling method for demand response in home energy management system," IEEE Trans. Smart Grid, vol. 4, no. 2, p. 1391-1400, 2013). However, the economic impact of the energy storage system utilization has been ignored.

Finally, useful tools that seeks the correct balance between the minimum electricity consumption cost and the residents' comfort in a building have been adopted, such as the particle swarm optimization technique (J. S. Heo, et al., "Multiobjective control of power plants using particle swarm optimization techniques," IEEE Trans. Energy Convers., vol. 21, no. 2, pp. 552-561, 2006) and the home area network architecture technique (M. Inoue, et al., "Network architecture for home energy management system," IEEE Trans. Consum. Electron., vol. 49, no. 3, pp. 606-613, 2003).

Although the EMSs for building applications, that have been published in the technical literature, can successfully provide energy saving considering the residents' comfort, they disregard the energy price of the batteries with respect to the feed in tariff policy of the energy provider. Moreover, they do not examine the potentiality for maximizing the exploitation of the electric energy generated by the RES with respect to the real time energy price, through the proper selection between injecting it to the grid or temporarily storing it in the BSS. Finally, they do not examine the fulfillment of all the above objectives with respect to the aim of providing an optimal balance between the cost of the consuming energy and the residents' comfort.

A generalized concept of a net zero energy building with renewable energy integration has been presented in the paper of K.Rushikesh Babu, et al., "Implementation of net zero energy building (NZEB) prototype with renewable energy integration", IEEE Conf. TENSYMP, pp. 1-5, July 2017. However, the energy generated by the renewable energy sources is simply regulated to satisfy the electric energy demands by the electric loads, but no control algorithm is disclosed to be applied to optimally manage the electric energy within the microgrid of the building. Consequently, the problem of optimalizing distribution of electric energy remains, resulting in the persistence of the need of a solution to that problem.

### Aim of the invention

The scope of the invention is defined by the independent claims. Dependent claims specify embodiments thereof.So,

the object of this invention consists in providing a solution to the aforementioned problems or drawbacks, by which the aforementioned drawbacks and/or deficiencies are remedied to.

The goals of the proposed invention are to develop an EMS algorithm and its technical implementation involving a suitable combination of the following criteria:

a) a reduction of the electric energy absorbed by the grid and therefore, an increase of the energy autonomy of the building,
b) an increase of energy utilization within the microgrid of the building, and
c) considering an acceptable comfort level by the residents.

Therefore:

- the real-time electricity price is one parameter among many others, such as generated and consumed energy by RES and appliances, respectively, state of charge of the BSS, weather forecast, indoor temperature, etc.,
- the user preferences are considered as inputs to the control system for determining the acceptable starting and ending time slots of each programmable appliance designated hereafter as PA, and
- the energy price of the BSS is one of the ultimate benefits of EMS of the invention, that is resulting from an optimal utilization of the BSS.

The aim of the EMS method of the invention is thus to address a pure energy problem that ultimately has economic and environmental impacts, as occurs when aiming at improving the energy efficiency and performance of an application.

Summary of the invention

There is thus proposed according to the invention an energy management method as defined in the appended main claim. Thanks to the method proposed by the invention, one is able to improve the performance of a nZEB by considering the generated/consumed electric energy by each device, the user preferences, the state-of-charge SoC and the energy price of the BSS, the weather forecast, the real-time electricity price, and the nZEB's construction characteristics. Furthermore, reduction of the electricity utility bill as well as limitation of the carbon emissions are attained, and also energy saving as well as protection of the battery's lifespan are accomplished.

According to a main embodiment of the energy management method of this invention, it is based on a genetic algorithm technique -referred to hereafter as GAT, which remarkably comprises all the steps a) to h) of appended claim 1 below, thus providing the following. The method proposed according to the present invention is remarkable in that it provides a genetic algorithm comprising a series of steps as specified and defined, which calculates an optimum balance between a set of pre-established targets of essentially technically oriented factors consisting of energy saving, comfort of building residents which is actually a human feeling yet but which is associated to a technical factor in close relationship with energy, such as heating, and finally a maximum exploitation of the generated electric energy by the renewable energy source, which is again a technical factor. Calculating such an optimal balance among various factors with technical content of various degrees yet, provides a technical effect, which is notably enhanced by a technical development of a cost function J further defined in the claims according to a further preferred embodiment of the invention.

Consequently, there is provided thanks to the invention a multi-target control algorithm providing notably technical means to improve the performance of a nZEB notably consisting of the generated/consumed electric energy by each device, the state-of-charge SoC, the weather forecast and the nZEB's construction characteristics, and also user preferences that are associated to technical oriented factors, at least in part.

Naturally, these technical oriented factors generate equally technically oriented achievements such as limitation of the carbon emissions that are attained, and also energy saving as well as protection of the battery's lifespan that are accomplished therewith on a purely technical basis, in addition to a yet less technical oriented achievement of reduction of the electricity utility bill, which is merely one aspect though among many others with pronounced technical content as set out above.

It results from the preceding that the remarkably innovative feature proposed thanks to the invention is related to administering a wide variety of aspects of the electrical energy life cycle including several technical aspects as set out above -in addition to economic aspects yet-, involving technical considerations accordingly, such as the generated/consumed electric energy by each device, said state-of-charge SoC, the weather forecast, and the nZEB's construction characteristics, in order to limit the carbon emissions, and also energy saving, as well as protection of the battery's lifespan.

The outcome of said GAT is the proper online task scheduling of the programmable loads, proper regulation of the controllable loads and proper control of the BSS that are provided as control signals Sc to a system that comprises power switches and the inverter of a BSS.

According to a more particular embodiment in this invention, photovoltaics (PVs) and wind turbines (WTs) are used as RES and BSS as energy storage systems. In this invention, although the energy management scheme has been developed for nZEBs with RES consisting of PVs and WTs, it can also cooperate with any other type of RES, by properly changing the control algorithm.

This invention thus presents a method that improves the performance of the energy management of electric loads, renewable energy sources RES and battery storage systems BSS in nearly-zero energy buildings nZEB. It is based on a technical implementation of the genetic algorithm technique and provides an optimal balance between the objectives of energy saving, comfort of the building residents and maximum exploitation of the generated electric energy by the RES through the proper utilization of an energy storage system. This is accomplished by controlling a system, that comprises power switches and the inverter of a BSS, through control signals which are provided by the energy management algorithm which is housed in a properly configured controller.

Specifically, the concept of the invention is based on the following operations as method steps:

1) time scheduling of the operation of each PA,

2) proper regulation of the operation of each CA, so as the value of the reference variable is within the upper and lower limits defined by the residents, and

3) decision for the proper operating mode (i.e. charging or discharging) and the level of the current of the BSS.

The above are realized by:

i) constructing a prediction plan for the estimated energy demand by the loads, the energy that can be stored and recovered by the BSS, and the expected generated energy by the RES,

ii) properly controlling a system of power switches to regulate the operation of the PAs and CAs, as well as properly controlling the inverter of the BSS to regulate the battery operating mode, through the energy management method and considering:

- the consumed or generated or stored electric energy at several devices of the nZEB microgrid (i.e. PAs, CAs, UAs, RES, and BSS), as well as the energy absorbed by or provided to the grid, and the state-of-charge of the BSS,
- the residents' definitions for the acceptable starting and ending time of the PAs, as well as the acceptable minimum and maximum indoor temperature,
- and also, some other parameters that are used to define the real time energy plan for the building, such as the weather forecast and the electricity price.

The developed EMS algorithm aims a reduction of the electric energy absorbed by the grid and therefore, an increase of the energy autonomy of the building, and increase of energy utilization within the microgrid of the building. Therefore, the real-time electricity price is one parameter among many others, such as the energy generated and consumed by RES and appliances, respectively, state of charge of the BSS, weather forecast, indoor temperature, etc. In addition, the user preferences are considered as inputs to the control system for determining the acceptable starting and ending time slots of each programmable appliance PA, and also the energy price of the BSS is one of the ultimate benefits of EMS of the invention, that is resulted by the optimal utilization of the BSS.

According to a preferred embodiment of the invention, the optimization problem is solved through the minimization of the cost function J as defined utilizing the genetic algorithm technique GAT, by applying an iterative discrete calculation procedure for any sampling cycles.

From the above it is thus to be concluded that the EMS method of the invention addresses a purely energy problem that, ultimately, has not only economic but also environmental impacts, as occurs in an invention for improving the energy efficiency and performance of an application. Therefore, this involves a technical effect of the invention.

According to a further embodiment of the invention, the output signals of the EMS, for a nZEB with RES and a BSS, are the optimal starting time $t_{PA}$ of the PAs, the optimal time vectors $T_{ch}$ and $T_{dis}$ for the charging and discharging operation of the BSS, respectively, and the reference indoor temperature of the building $T_{in}^{ref}$, for every discrete time interval.

According to a still further embodiment of the invention, the energy consumption vector $NxM$ for the appliances of a building [eq. (9)] is determined by the energy consumption $e_A^i(k)$ of each appliance $A$, where $A = \{PA, CA, UA\}$, $k$ is the number of the sampling cycle that each one has time duration $\Delta t_k$ and $i$ is the number of the appliance $A$. The $N$ is the number of time-slots per day and M is the maximum number of the appliances in the above three types.

According to a yet further embodiment of the invention, the optimal operating time vectors $T_{ch}$ [eq. (19)] and $T_{dis}$ [eq. (20)] for the charging and discharging modes of the BSS, respectively, are determined by the $t_{ch}(k)$ and $t_{dis}(k)$ for each sampling step $k$ that denote if the BSS is in the charging and discharging modes, respectively. The $t_{ch}(k)$ and $t_{dis}(k)$ take values of 1 or 0 if the BSS is in operation or not, respectively.

According to an additional embodiment of the invention, the energy which has been generated by the RES and has been stored in the BSS is equal or higher the amount of energy which has been supplied to the appliances by the BSS. This constraint is imposed by the fact that, the BSS should operate as UPS in case of electric power outage and the RES could not provide the required amount of electric energy to the appliances. This is realized by the variable x in eq. (32) and it takes the value 1 when the BSS is active and 0 when the BSS is inactive.

According to a further embodiment of the invention, the EEP matrix of the electric energy price is determined by the $EEP_{buy}(k)$ and the $EEP_{sell}(k)$ that are the buying and selling electric energy price, respectively, for any $k$ sampling cycle $(1 \leq k \leq N)$.

According to a further embodiment of the invention, the parameters $w_1$ and $w_2$ are the weighting factors of the abovementioned cost/fitness function J [eq. (29)] that represent the importance of the objectives of the comfort level and energy cost respectively.

Thanks to the invention set out herein, the optimization problem that involves the energy generation, consumption and storage options, can thus be solved by minimizing said cost/fitness function J that is given by the eq. (29).

Further particularities and features of the invention are defined in the further sub-claims notably 5 and following. This invention further also relates to a system as defined in both last sub-claims, which is especially intended for the implementation of a method as set out above (control method of the PAs, CAs, BSS, method for solving the energy optimization problem, and the description of the system for the implementation of said EMS), having a technical effect as well accordingly.

The method and system of the invention are further illustrated by the appended drawings, wherein further details are explained in more detail in the following description in some embodiments of the invention with reference to the attached drawings.

**Brief description of the drawings**

Fig. 1 schematically shows the microgrid of the EMS of the present invention for a nZEB, thereby showing a basic schematic of the microgrid and the EMS according to a basic embodiment of the present invention for a nZEB.
Fig. 1a is a similar representation as Fig. 1 showing a typical schematic of the microgrid and the EMS according to a more developed embodiment of the present invention for a nZEB.
Fig. 2 shows examples of time slots showing an EMS which is implemented according to the present invention by employing the GAT wherein the daily operation of each appliance is divided into $N$ discrete time intervals.
Fig. 3 is a flow chart of the algorithm-based EMS of the present invention showing a flow chart of the genetic algorithm-based EMS according to said basic embodiment of the present invention.
Fig. 3a is a similar representation as Fig. 3 showing a flow chart of the genetic algorithm-based EMS corresponding to said developed embodiment of the present invention.
Fig. 4 illustrates the performance of the optimal EMS of the present invention, in a nZEB over a 24-hours period.
Fig. 5 illustrates performance without the invention showing a comparative representation with regard to the case of Fig. 4.

**Description**

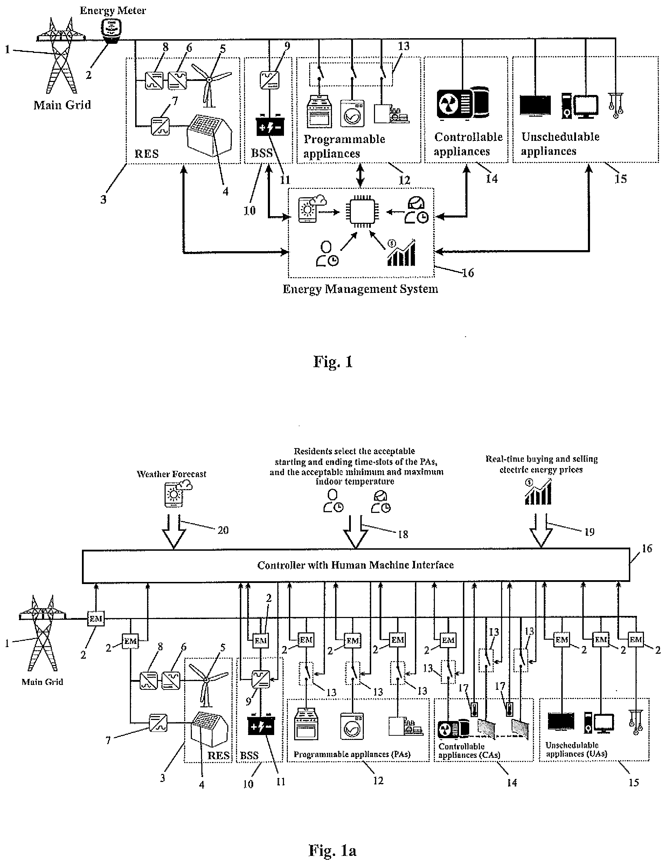

In Fig. 1, a typical schematic of the microgrid and the EMS of the present invention for a nZEB is illustrated. It consists of the main grid 1, energy meters 2, temperature sensors 17, RES 3, BSS 10, programmable appliances 12, controllable appliances 14, unschedulable appliances 15 and a controller 16 that houses the energy management software and has the capability to obtain input data through a human machine interface 16, i.e. acceptable starting and ending time-slots of the programmable appliances 18, real time buying and selling electric energy prices 19 obtained by an electric energy provider utility, and weather forecast 20 obtained by a weather forecast utility as shown in Fig 1a. The RES comprises the PVs 4, the WTs 5 and the corresponding power converters to connect them with the grid i.e. the AC/DC and DC/AC converters 6 and 8, respectively, for the WT, and the DC/AC converter 7 for the PV 6. The BSS 10 consists of the battery pack 11 and the DC/AC power inverter to connect the batteries with the grid 9. The programmable appliances PAs 12 are electric loads, the operating time whereof can be planned, such as an electric cooker, a washing machine, dishwasher, ironing, vacuum cleaner, etc. and controlled by a system of power switches 13. The controllable appliances CAs 14 are electric loads, the operation whereof is regulated by one or more variables, such as a heat pump, an air-conditioner, etc. where control variable is the temperature. The unschedulable appliances UAs 15 are electric loads that cannot be programmed and they are switched on/off either manually by the residents, such as personal computers, TV, security lighting, etc. or automatically, such as the lights regulated by a movement control system and also, they are appliances that the residents do not have any control action, such as the refrigerator, water cooler, etc.
The object of the present invention to attain an appropriate balance between the nZEB performance and the comfort of the residents is based on the following operations:

- time scheduling of the operation of each PA 12,
- proper regulation of the operation of each CA 14, so as the value of the reference variable is within the upper and lower limits set by the residents, and
- decision for the proper operating mode (i.e. charging or discharging) and the level of the current of said BSS.

This is realized by

- constructing a prediction plan for the estimated energy demand by the loads, the energy that can be stored and recovered by the BSS, and the expected generated energy by the RES,
- properly controlling the operation of the PAs, CAs and BSS through the energy management method by considering:

  - the consumed or generated or stored electric energy at several devices of the nZEB microgrid, i.e. PAs, CAs, UAs, RES, ad BSS, as well as the absorbed or provided energy to the grid, and the SoC of the BSS, and
  - the real time electricity price, the residents' preferences for the acceptable starting and ending time of the PAs and acceptable minimum and maximum indoor temperature, and the weather forecast.

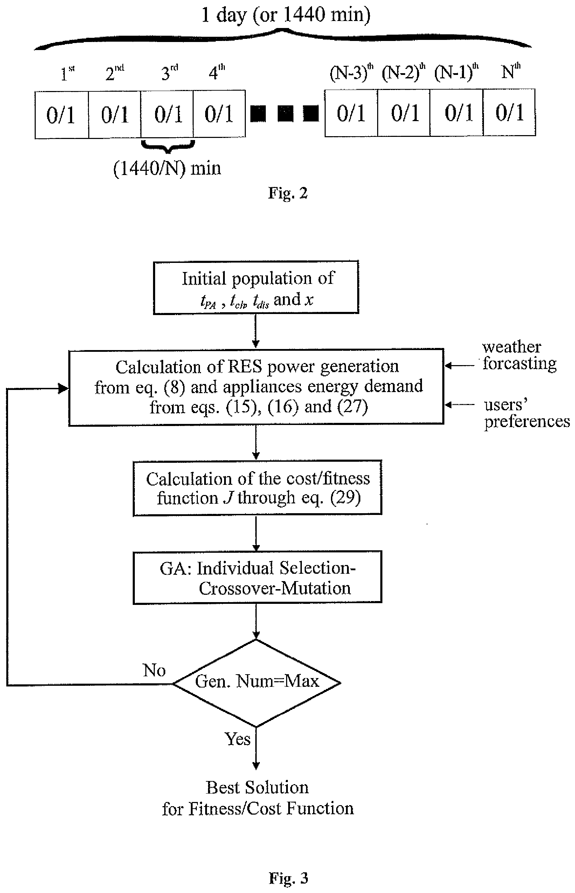

The EMS of the present invention is implemented by employing the GAT where the daily operation of each appliance is divided into N discrete time intervals, as shown in Fig. 2. The solution of a genetic algorithm is represented in binary mode as strings of 0/1, where each time-slot k denotes a time interval $\Delta t_k$ that the energy sources and appliances activation or deactivation is represented by the binary 1 or 0, respectively. This means that, at every $\Delta t_k$, the EMS is informed for the new electricity price and can take action on scheduling and controlling the operation of the nZEB's devices. The selection of the sampling rate $\Delta t_k$ is based on the desired accuracy, the computational capability of the controller and the frequency regime of modifying the electricity price by the energy provider. Due to the discrete control in the energy management procedure, the length of the operation of an appliance or an energy source, as that is considered by the EMS, is a rounded integer multiple of the predefined time interval and thus, equal or slightly greater than the actual length of the operation.

The optimal operation of the EMS is accomplished with the following five control sectors.

*a)* The output power of the wind generator is calculated by the following formula:

$$P_{WT} = \begin{cases} a \cdot u^3 - b \cdot P_N & u_{ci} < u < u_N \\ P_N & u_N \leq u \leq u_{co} \end{cases} \tag{1}$$

where $u$ is the wind speed,

$$a = \frac{P_N}{u_N^3 - u_{ci}^3} \quad \text{και} \quad b = \frac{u_{ci}^3}{u_N^3 - u_{ci}^3} \tag{2}$$

$u_{ci}$, $u_{co}$ and $u_N$ are the cut-in, the cut-out and the nominal wind speeds, respectively, and $P_N$ is the rated power of wind turbine. Thus, for each sampling cycle k that has time duration $\Delta t_k$, the generated electric energy is given by

$$e_{WT}(k) = \int_0^{\Delta t_k} P_{WT} dt \tag{3}$$

and the energy generation vector for the N time-slots is

$$E_{WT} = \begin{bmatrix} e_{WT}(1) & e_{WT}(2) & \cdots & e_{WT}(N) \end{bmatrix} \tag{4}$$

In a similar way, by having as inputs the irradiance level $R_{irr}$ and the average temperature of the cells $T_{cell}^{AV}$ that are estimated by the weather forecast, the output power of a PV system for each sampling cycle $k$ is given by

$$e_{PV}(k) = \int_0^{\Delta t_k} P_{PV} dt \tag{5}$$

where

$$P_{PV} = N_{PV} \left\{ P_{PV\max} \frac{R_{irr}}{1000} \left[ 1 - a_T (T_{cell}^{AV} - 25) \right] \right\} \tag{6}$$

and $N_{pv}$ is the number of PV modules, $P_{PV\max}$ is the peak output power of a PV module and $a_T$ is the temperature effect coefficient. The predicted generated electric energy by a PV system for each sampling cycle $k$ is given by

$$E_{PV} = \begin{bmatrix} e_{PV}(1) & e_{PV}(2) & \cdots & e_{PV}(N) \end{bmatrix} \tag{7}$$

Thus, by using the eq. (4) and (7), the total energy production vector by the RES is

$$E_{RES} = E_{WT} + E_{PV} \tag{8}$$

*b)* The energy consumption vector *NxM* for the appliances of the building is:

$$E_A = \begin{bmatrix} e_A^1(1) & e_A^1(2) & \cdots & e_A^1(N) \\ e_A^2(1) & e_A^2(2) & \cdots & e_A^2(N) \\ \vdots & \vdots & \vdots & \vdots \\ e_A^M(1) & e_A^M(2) & \cdots & e_A^M(N) \end{bmatrix} \tag{9}$$

where, in any $e_A^i(k)$ of the above vector, $k$ is the number of the sampling cycle that each one has time duration $\Delta t_k$ and $i$ is the number of the appliance $A$, where $A = \{PA, CA, UA\}$. The $N$ is the number of time-slots per day and M is the maximum number of the appliances in the above three types.

For each i PA, additionally to the energy consumption $e_{PA}^i$, three parameters are introduced that their values are provided by the residents, i.e, the $a_{PA}^i$ and $b_{PA}^i$ that denote the acceptable starting and ending time-slot, and the $\mathrm{LoO}_{PA}^i$ that represents the duration of the operation of the i PA.

In order to improve the performance of the nZEB, the genetic algorithm seeks the optimal starting time $t_{PA}^i$ of each i PA with the following constraint

$$t_{PA}^i \in \left[ a_{PA}^i \quad (b_{PA}^i - \mathrm{LoO}_{PA}^i) \right] \tag{10}$$

and defines the optimal operation starting time vector for the PAs

$$t_{PA} = \begin{bmatrix} t_{PA}^1 & t_{PA}^2 & \cdots & t_{PA}^M \end{bmatrix} \tag{11}$$

The optimal operating starting time matrix for the PAs is

$$T_{PA} = \begin{bmatrix} t_{PA}'^1(1) & t_{PA}'^1(2) & \cdots & t_{PA}'^1(N) \\ t_{PA}'^2(1) & t_{PA}'^2(2) & \cdots & t_{PA}'^2(N) \\ \vdots & \vdots & \vdots & \vdots \\ t_{PA}'^M(1) & t_{PA}'^M(2) & \cdots & t_{PA}'^M(N) \end{bmatrix} \tag{12}$$

where

$$t_{PA}'^i(k) = \begin{cases} 1 & k \in [t_{PA}^i \quad t_{PA}^i + \mathrm{LoO}_{PA}^i) \\ 0 & k \notin [t_{PA}^i \quad t_{PA}^i + \mathrm{LoO}_{PA}^i) \end{cases} \quad \forall i \in [1\ M], k \in [1\ N] \tag{13}$$

The energy consumption matrix by the PAs is

$$E_{PA} = \begin{bmatrix} e_{PA}^1(1)t_{PA}'^1(1) & e_{PA}^1(2)t_{PA}'^1(2) & \cdots & e_{PA}^1(N)t_{PA}'^1(N) \\ e_{PA}^2(1)t_{PA}'^2(1) & e_{PA}^2(2)t_{PA}'^2(2) & \cdots & e_{PA}^2(N)t_{PA}'^2(N) \\ \vdots & \vdots & \vdots & \vdots \\ e_{PA}^M(1)t_{PA}'^M(1) & e_{PA}^M(2)t_{PA}'^M(2) & \cdots & e_{PA}^M(N)t_{PA}'^M(N) \end{bmatrix} \tag{14}$$

and thus, the total energy consumption by the PAs is given by

$$EC_{PA} = \sum_{i=1}^{M} e_{PA}^i(k)\, t_{PA}'^i(k) = \begin{bmatrix} ec_{PA}^1 & ec_{PA}^2 & \cdots & ec_{PA}^N \end{bmatrix} \quad \forall k \in [1, N] \tag{15}$$

Finally, the energy consumption of the UAs can be calculated in a week basis by

$$EC_{UA} = \sum_{i=1}^{M} e_{UA}^{i}(k) = \begin{bmatrix} ec_{UA}^{1} & ec_{UA}^{2} & \cdots & ec_{UA}^{N} \end{bmatrix} \quad \forall k \in [1, N] \qquad (16)$$

c) One of the goals of the EMS is to manipulate the energy generated by the RES and to decide if it is beneficial to be consumed by the appliances of the building, stored in the batteries or sold to the energy provider. The energy battery storage system vector for the charging and discharging modes of the BSS, respectively, for the $N$ time-slots, are

$$E_{BSS}^{ch} = \begin{bmatrix} e_{BSS}^{ch}(1) & e_{BSS}^{ch}(2) & \cdots & e_{BSS}^{ch}(N) \end{bmatrix} \qquad (17)$$

$$E_{BSS}^{dis} = \begin{bmatrix} e_{BSS}^{dis}(1) & e_{BSS}^{dis}(2) & \cdots & e_{BSS}^{dis}(N) \end{bmatrix} \qquad (18)$$

In addition, the genetic algorithm defines the optimal operating time vectors for the charging and discharging modes of the BSS, respectively, as

$$T_{ch} = \begin{bmatrix} t_{ch}(1) & t_{ch}(2) & \cdots & t_{ch}(N) \end{bmatrix} \qquad (19)$$

$$T_{dis} = \begin{bmatrix} t_{dis}(1) & t_{dis}(2) & \cdots & t_{dis}(N) \end{bmatrix} \qquad (20)$$

where the $t_{ch}(k)$ and the $t_{dis}(k)$ denote if the BSS is in the charging and discharging modes, respectively, and they can take values of 1 or 0 if the BSS is in operation or not, respectively.

Thus, considering the eq.(17)-(20), the final energy battery storage system vectors for the charging and discharging modes of the BSS, respectively, for the N time-slots, are

$$E_{BSS}^{\prime ch} = \begin{bmatrix} e_{BSS}^{ch}(1)t_{ch}(1) & e_{BSS}^{ch}(2)t_{ch}(2) & \cdots & e_{BSS}^{ch}(N)t_{ch}(N) \end{bmatrix} \qquad (21)$$

$$E_{BSS}^{\prime dis} = \begin{bmatrix} e_{BSS}^{dis}(1)t_{dis}(1) & e_{BSS}^{dis}(2)t_{dis}(2) & \cdots & e_{BSS}^{dis}(N)t_{dis}(N) \end{bmatrix} \qquad (22)$$

Since the batteries are charged by the RES, the main cost is the availability cost $C_b$ that is defined as the replacement cost $C_{rep}$ with respect to the total lifetime cycling energy capacity of the battery $Q_{bt}$ and it is calculated by $C_b = C_{rep}/Q_{bt}$. The total lifetime capacity is estimated by $Q_{bt} = Q_{br} \cdot DoD[0.9L_r - 0.1]$, where DoD is the depth-of-discharge that is the maximum discharge with respect to the rated and $L_r$ is the rated lifetime of a battery obtained by the battery datasheet.

d) The target or objective for high comfort of the residents is determined by the approach that the home appliances should complete their work as soon as possible. This means that, for any $i$ PA, it is aimed to reduce the delay between the starting time that is preferred by the residents and is expressed by the $a_{PA}^{i}$ and the starting time $t_{PA}^{i}$ that has been programmed by the control algorithm of the EMS.

Thus, a variable which can be used to consider the residents' comfort is the delay time rate DTR, that for each $i$ PA is defined by the following formula

$$DTR_{PA}^{i} = \frac{t_{PA}^{i} - a_{PA}^{i}}{b_{PA}^{i} - (LoO_{PA}^{i} + a_{PA}^{i})} \qquad (23)$$

The DTR takes values between 0 and 1 and specifically, the value 0 means high residents' comfort with respect to the priority in satisfying their preferences, while the 1 means the lower acceptable comfort level and thus, the lower acceptable priority in satisfying the residents' preferences.

Based on the above, the residents' comfort level degradation (CLD) is introduced that is determined by the expression

$$CLD_{PA} = \sum_{i=1}^{M} r^{(DTR_{PA}^{i})} \qquad (24)$$

where the $r$ can be any integer greater than 1 ($r>1$). The above parameter is used to consider the residents' comfort level in the cost function of the EMS optimization problem.

Another parameter that affects the residents' comfort is the proper heating/cooling of the building premises with respect to their preferences. The residents are allowed to determine the acceptable temperature range of the building indoor temperature $T_{in}^{min} \leq T_{in} \leq T_{in}^{max}$ and the EMS controls the reference temperature $T_{in}^{ref}$ in order to both improve the performance of the nZEB and reduce the residents' CLD with respect to heating/cooling. For any sampling cycles $k$, the latter is defined as

$$CLD_{H/C} = \begin{cases} \sum_{i=1}^{N} r^{\left(\frac{T_{in}^{ref}(k)-T_{in}^{max}}{T_{in}^{max}-T_{in}^{min}}\right)} & \text{for heating} \\ \sum_{i=1}^{N} r^{\left(\frac{T_{in}^{ref}(k)-T_{in}^{min}}{T_{in}^{max}-T_{in}^{min}}\right)} & \text{for cooling} \end{cases} \qquad (25)$$

Thus, from eqs. (24) and (25), the total comfort level degradation is

$$CLD_{tot} = CLD_{PA} + CLD_{H/C} \qquad (26)$$

Therefore, the regulation of the reference indoor temperature affects the electric energy consumption of the heat pump and thus the energy consumption vector for the heating/cooling system is

$$E_{CA} = E_{H/C} = \begin{bmatrix} e_{H/C}(1) & e_{H/C}(2) & \cdots & e_{H/C}(N) \end{bmatrix} \qquad (27)$$

where $e_{H/C}(k)$ is the electric energy consumption by the heating/cooling system, for each sampling step $k$.

e) The buying and selling electric energy price vectors are defined, respectively, by

$$EEP_{buy} = \begin{bmatrix} EEP_{buy}(1) & EEP_{buy}(2) & ... & EEP_{buy}(N) \end{bmatrix}$$
$$EEP_{sell} = \begin{bmatrix} EEP_{sell}(1) & EEP_{sell}(2) & ... & EEP_{sell}(N) \end{bmatrix} \qquad (28)$$

where $EEP_{buy}(k)$ and $EEP_{sell}(k)$ are the buying and selling electric energy price, respectively, for any $k$ sampling cycle ($1 \leq k \leq N$).

By using the eqs. (1)-(28), the optimization problem that involves the energy generation, consumption and storage options, can be solved by minimizing the following cost function

$$J = w_1 CLD_{tot} + w_2 \left[ F_1(E_{ep}) + F_2(E_{BSS}^{tdis}) \right] \qquad (29)$$

where

$$F_1(E_{ep}) = \sum_{k=1}^{N} [\lambda \cdot EEP_{buy}(k) + (1-\lambda) \cdot EEP_{sell}(k)] E_{ep}(k) \qquad (30)$$

$$F_2(E_{BSS}^{tdis}) = \sum_{k=1}^{N} C_b E_{BSS}^{tdis}(k) \qquad (31)$$

$$\kappa = 1$$

$$E_{ep} = E_{RES}^{T} - (EC_{PA}^{T} + EC_{UA}^{T} + E_{CA}^{T}) - x(E_{BSS}^{\prime ch,T} - E_{BSS}^{\prime dis,T}) \qquad (32)$$

$$\lambda = \begin{cases} 0 & E_{ep}(k) \geq 0 \\ 1 & E_{ep}(k) < 0 \end{cases} \qquad (33)$$

The parameters $w_1$ and $w_2$ are the weighting factors that represent the importance of the objectives of the comfort level and energy cost respectively, wherein $w_1 + w_2 = 1$, where $0 \leq w_1 \leq 1$ and $0 \leq w_2 \leq 1$.

The parameter x takes values 0 and 1, and it is used to assure in the eq. (32) that the energy which has been generated by the RES 3 and stored in the BSS 10 is equal to or higher than the amount of energy which has been provided to the appliances by the BSS. The x is equal to 1 when the BSS is active and 0 when it is inactive. This constraint is imposed by the fact that the BSS should operate as uninterruptible power supply UPS in case of electric power outage and the RES could not provide the required amount of electric energy to the appliances.

The optimal starting time $t_{PA}$ of the PAs 12 as defined by the eq. (11) and the reference indoor temperature of the building $T_{in}^{ref}$ considering the residents' comfort level as defined by the eq. (26), as well as the optimal time vectors $T_{ch}$ and $T_{dis}$ for the charging and discharging operation of the battery storage system 10 are determined by the EMS that is realized by utilizing the GAT device.

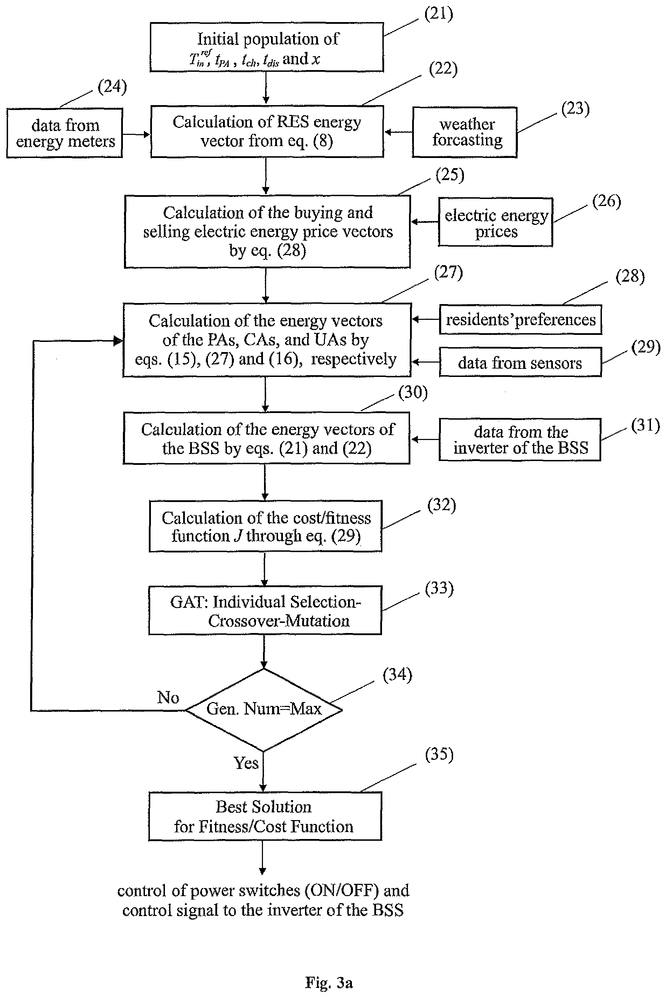

The flow chart of the genetic algorithm-based EMS of the present invention is illustrated in Fig. 3. The genetic algorithm GAT is initiated by creating a certain number of random "chromosomes" which are sets of possible solutions of the optimization problem [initial population, step (21)]. Then, the RES energy vector is calculated [step (22)], by considering the weather forecasting data (23) and data from energy meters (24). Then, the buying and selling electric energy price vectors are calculated [step (25)], by the predicted electric energy prices (26). The outcomes of the above steps are utilized to calculate the energy demand by the PAs 12, CAs 14, and UAs 15 [step (27)], taking into account data with respect to the residents' preferences (28) and data obtained from sensors 29. Then, the energy vectors of the BSS are calculated [step (30)], considering data obtained from the inverter 9 of the BSS (31). The outcomes of the above steps are imported to a cost function [step (32)] and the genetic algorithm GAT evaluates the exported fitness values [step (33)]. Then, the best chromosomes are selected and via crossover and mutation, the new solutions are created that include both old and new sets of solutions. Finally, the genetic algorithm evaluates if the expected generation number has been satisfied or not [step (34)] and thus, new sets of solutions are provided as the new generation or the GAT converges to the final solution, by following an iterative procedure that includes the steps (27) to (34). When, the GAT converges and the best solution for said cost function J is attained [step (35)], control signals $s_c$ of ON/OFF (digital signals of 1 and 0) are provided to power switches to regulate the operation of PAs 12 and CAs 14, and control signal to the inverter 9 of said BSS to regulate the operation of the battery 11 (charging or discharging modes).

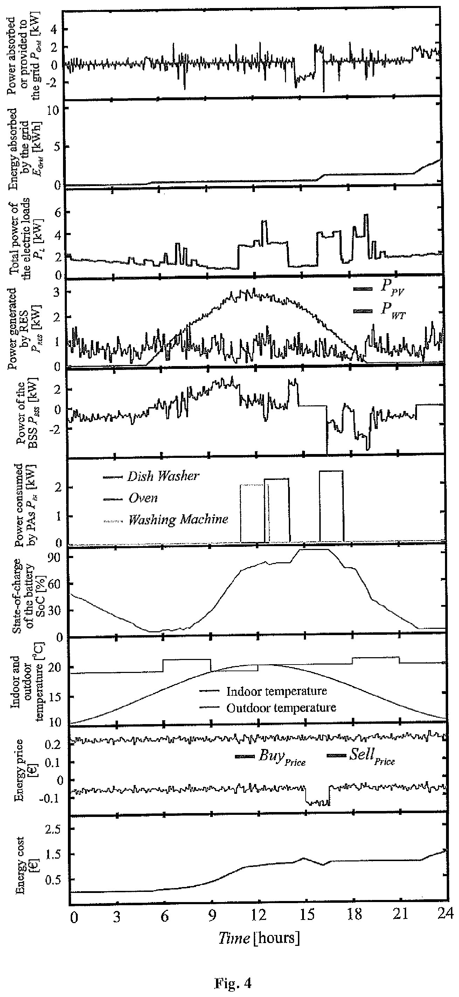

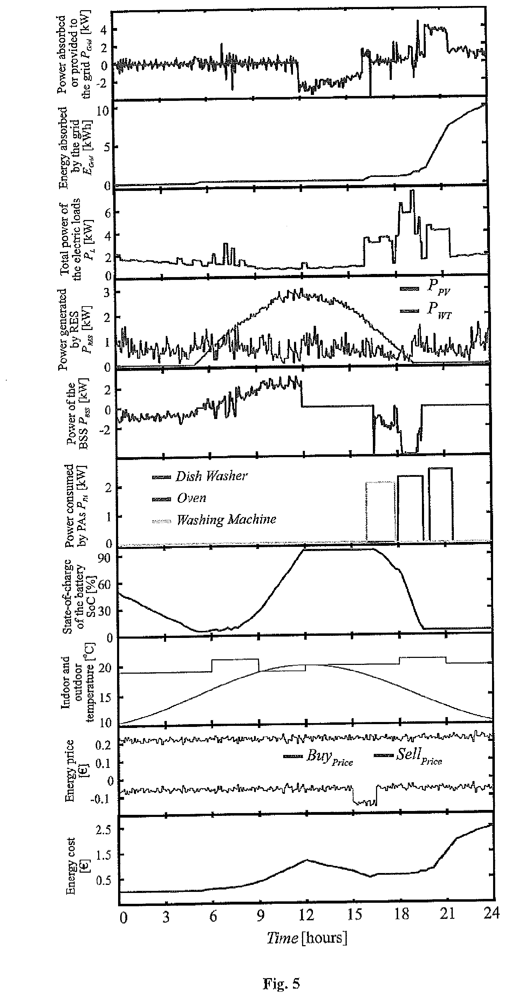

Fig. 4 illustrates the performance of the optimal EMS of the present invention, in a nZEB over a 24-hours period, and is compared with the case that the electric loads are operated according to the residents' selection without applying an energy management method. As can be seen, lower electric energy is absorbed from the grid in Fig. 4 compared to Fig. 5, due to the proper scheduling of the electric loads that takes into account the residents' preferences. Specifically, 2,7 kWh is absorbed by the grid, in the examined day, with the optimal EMS of Fig. 4, compared to the 9,8 kWh that is absorbed by the grid, in the examined day for the case of Fig. 5. This is attained because only the optimal energy management provides an optimal balance, through the minimization of a properly configured cost function J, between the residents' comfort, since the electric loads operate within the acceptable time intervals and the indoor temperature is within the acceptable maximum and minimum temperature range and the maximum exploitation of the electric energy generated by said RES through the proper utilization of said BSS. Moreover, due to the above goals and since the real time energy price is considered, reduction of the total energy cost is attained.

## Claims

1. Method for the energy management of a nearly zero energy building (nZEB) providing a balance between the objectives of energy saving, comfort of the building residents and maximum exploitation of the generated electric energy by a set of renewable energy sources (RES) (4) through the utilization of a battery storage system (BSS) (10), **characterized in that** it is based on a genetic algorithm (GAT) with calculating said balance comprising the following steps that are referred to a time period of 24-hours ahead which is divided into N discrete time intervals:

a) considering the residents' selection of the acceptable starting and ending time-slots ( $a_{PA}^i$ and $b_{PA}^j$ , respectively for each $i$ appliance of the programmable appliances (12), the energy consumption vectors for the programmable appliances (12) are estimated, for N time-slots ($E_{PA}$), where said programmable appliances (PAs) are electric loads, the operating time whereof is planned,

b) considering the residents' selection of the acceptable minimum and maximum indoor temperature ( $T_{in}^{min}$ and $T_{in}^{max}$ , respectively) of the nearly zero energy building (nZEB), the energy consumption vectors ($E_{CA}$) of the controllable appliances (CAs) (14) are estimated, for N time-slots, where said controllable appliances (14) are electric loads, the operation whereof is regulated by the temperature,

c) for $N$ time-slots, the energy consumption vectors ($E_{UA}$) of the uncontrollable appliances (UAs) (15) is reported ($E_{UA}$), by utilizing data obtained from energy meters, where said uncontrollable appliances (15) are electric loads that cannot be programmed and they are switched on/off either manually by the residents or automatically and also, they are appliances that the residents do not have any control action,

d) for $N$ time-slots, the energy production vectors ($E_{WT}$ and $E_{PV}$, respectively) of said set of renewable energy sources (3) are estimated considering meteorological data obtained by a weather forecast utility, wherein the estimated total energy generated by said renewable energy sources (3) is determined by $E_{RES} = E_{WT} + E_{PV}$ ,

e) for $N$ time-slots, the energy vectors ( $E_{BSS}^{rch}$ and $E_{BSS}^{rdis}$ , respectively) of the battery storage system (10) for charging and discharging modes are estimated,

f) for N time-slots, the electric energy price vectors ($EEP_{buy}$ and $EEP_{sell}$, respectively) of buying and selling is constructed, by the estimated buying and selling prices, respectively, obtained by an electric energy utility,

g) the values of the acceptable starting and ending time-slots of each i appliance ( $a_{PA}^i$ and $b_{PA}^i$ , respectively), and the acceptable minimum and maximum inside temperature ( $T_{in}^{min}$ and $T_{in}^{max}$ respectively) provided by the residents in the aforementioned steps a) and b), and the energy vectors ($E_{WT}$, $E_{PV}$, $E_{PA}$, $E_{CA}$, $E_{UA}$, $E_{BSS}^{ch}$ , $E_{BSS}^{dis}$ ,) and said electric energy price (EEP) which are calculated in the aforementioned steps b) to f), are imported to a cost function (J) and then, said cost function (J) is minimized through said genetic algorithm (GAT), wherein said minimization yields, for the $N$ time-slots ahead, being values of the:

- control vectors of the starting time-slots of each programmable appliances (12), the reference indoor temperature, and the charging or discharging operating modes of the battery storage system (BSS) (10), and
- value of a parameter ($x$), that can take values 0 and 1, and it assures that the energy generated by the renewable energy sources (RES) (3) and stored in said battery storage system (10) is equal to or higher than the amount of energy which has been provided to the appliances by the said battery storage system (10), specifically wherein ($x$) is set equal to 1 when said battery storage system (10) is active and 0 when said battery storage system (10) is inactive,

h) the values, that are calculated in step g), of the:

- control vectors of the starting time-slots of each programmable appliance (12), the reference indoor temperatures for the N time-slots and the charging or discharging operating modes of said battery storage system (10) for the N time-slots are fed as input signals to a device that realizes the energy management method, while
- the control variable ($x$) is used as input variable at the optimization procedure of the next time sampling, that is realized in step g).

2. Method according to claim 1, **characterised in that** said steps a) to g) resp. h) are carried out in the order indicated.

3. Method according to any of the preceding claims, **characterised in that** said set of renewable energy sources (RES) (3) consists of wind turbines (WT) (5) resp. photovoltaics (PV) (6), particularly wherein

- said programmable appliances (PAs) (12) consist of electric cooker, washing machine, dishwasher, ironing, vacuum cleaner notably and/or wherein
- said controllable appliances (CAs) (13) consist of a heat pump and/or an air-conditioner, and/or wherein
- said uncontrollable appliances (UAs) (15) consist of personal computers, TV, security lighting or lights regulated by a movement control system.

4. Method of energy management according to any one of the preceding claims 1 to 4 3, **characterised in that** the genetic algorithm (GAT) seeks the starting time ( $t_{PA}^i$ ) of each programmable appliance (*i*-PA) (12), within the *N* time-slots, considering the constraints that said starting time ( $t_{PA}^i$ ) is equal-or-higher than the acceptable starting time slot ( $a_{PA}^i$ ), which is defined by the residents for each programmable appliance (*i*-PA) (12) and also, equal-or-lower than the acceptable ending time slot ( $b_{PA}^i$ ), which is defined by the residents for each programmable appliance (i-PA) (12), minus the duration of the programmable appliances i-PA (12) operation ( $\mathrm{LoO}_{PA}^i$ ), wherein

$$a_{PA}^i \leq t_{PA}^i \leq b_{PA}^i - \mathrm{LoO}_{PA}^i .$$

5. Method according to any one of the preceding claims 1 to 4, **characterised in that** said genetic algorithm (GAT) seeks the reference indoor temperature ( $T_{in}^{ref}$ ) for each of the *N* time-slots considering the constraint that said reference indoor temperature ( $T_{in}^{ref}$ ) is equal-or-higher than the minimum indoor temperature ( $T_{in}^{min}$ ) and equal-or-lower than the maximum indoor temperature ( $T_{in}^{max}$ ), which are defined by the residents, wherein $T_{in}^{min} \leq T_{in}^{ref} \leq T_{in}^{max}$ .

6. Method according to any one of the preceding claims 1 to 5, **characterised in that** the availability cost ($C_b$) of a battery storage system (10), is calculated by the ratio of the replacement cost (*Crep*), with respect to the total lifetime cycling energy capacity ($Q_{bt}$) of the battery storage system (10), wherein $Cb = C_{rep}/Q_{bt}$ , where the total lifetime capacity is estimated by $Q_{bt} = Q_{br} \cdot DoD[0.9L_r\text{-}0.1]$, where DoD is the depth-of-discharge, that is the maximum discharge with respect to the rated, and $L_r$ is the rated lifetime of a battery obtained by the battery datasheet.

7. Method according to any one of the preceding claims 1 to 6, **characterised in that** the target of high comfort of the residents is determined **in that** the home appliances complete their work as soon as possible, specifically wherein the residents' comfort is considered by defining the delay time rate (DTR) for each i programmable appliance (12) that is given by $\mathrm{DTR}_{PA}^i = \dfrac{t_{PA}^i - a_{PA}^i}{b_{PA}^i - (\mathrm{LoO}_{PA}^i + a_{PA}^i)}$ and takes values between 0 and 1, where the value 0 is defined as high residents' comfort with respect to the priority in satisfying their preferences, while the 1 is defined as the lower acceptable comfort level and thus the lower acceptable priority in satisfying the residents' preferences.

8. Method according to any one of the preceding claims 1 to 7, **characterised in that** a residents comfort level degradation (CLD$_{PA}$) with respect to the total programmable appliances (12) of the nearly zero energy building (nZEB) is calculated by $\mathrm{CLD}_{PA} = \sum_{i=1}^{M} r^{(\mathrm{DTR}_{PA}^i)}$ , where M is the total number of the programmable appliances (12) and *r* is an integer greater than 1, with *r* > 1 that is decided by the fact that, the higher r, the higher importance is given to the residents' comfort at the energy management.

9. Method according to the preceding claim 8, **characterised in that** the residents comfort level degradation with respect to the heating and cooling (CLD$_{H/C}$), is calculated by

$$\mathrm{CLD}_{H/C} = \begin{cases} \sum_{k=1}^{N} r^{\left(\frac{T_{in}^{ref}(k) - T_{in}^{max}}{T_{in}^{max} - T_{in}^{min}}\right)} & \text{for heating mode} \\ \\ \sum_{k=1}^{N} r^{\left(\frac{T_{in}^{ref}(k) - T_{in}^{min}}{T_{in}^{max} - T_{in}^{min}}\right)} & \text{for cooling mode} \end{cases} ,$$

for any sampling cycles k, where $1 \leq k \leq N$.

10. Method according to preceding claim 9, **characterised in that** the total comfort level degradation of the residents (CLD$_{tot}$) is calculated by CLD$_{tot}$ = CLD$_{PA}$ + CLD$_{H/C}$.

**11.** Method according to any one of the preceding claims 1 to 10, **characterised in that** a cost function

$$J = w_1 \, \mathrm{CLD}_{tot} + w_2 \left[ F_1(E_{ep}) + F_2(E_{BSS}^{\prime dis}) \right]$$ is minimized through utilizing said genetic algorithm (GAT), wherein an iterative discrete calculation procedure is applied for any sampling cycles k, wherein $1 \leq k \leq N$, where

$$F_1(E_{ep}) = \sum_{k=1}^{N} [\lambda \cdot EEP_{buy}(k) + (1 - \lambda) \cdot EEP_{sell}(k)] E_{ep}(k)$$

$$F_2(E_{BSS}^{\prime dis}) = \sum_{k=1}^{N} C_b E_{BSS}^{\prime dis}(k)$$

$$E_{ep} = E_{RES}^{T} - (EC_{PA}^{T} + EC_{UA}^{T} + E_{CA}^{T}) - x(E_{BSS}^{\prime ch,T} - E_{BSS}^{\prime dis,T})$$

and

$$\lambda = \begin{cases} 0 & E_{ep}(k) \geq 0 \\ 1 & E_{ep}(k) < 0 \end{cases}$$

considering that the $E_{RES}^{T}$, $EC_{PA}^{T}$, $EC_{UA}^{T}$, $E_{CA}^{T}$, $E_{BSS}^{\prime ch,T}$ and $E_{BSS}^{\prime dis,T}$ are the transposition of the vectors ($E_{RES}$, $EC_{PA}$, $EC_{UA}$, $E_{CA}$, $E_{BSS}^{\prime ch}$ and $E_{BSS}^{\prime dis}$) respectively, and the $EEP_{buy}(k)$, $EEP_{sell}(k)$, $E_{BSS}^{\prime dis}$, and $E_{ep}(k)$ are the $k^{th}$-values of the respective energy vectors.

**12.** Method according to claim 11, **characterised in that** the parameters ($w_1$) and ($w_2$) of the cost function ($J$) are constituted by two weighted factors which represent the importance of the objectives of the comfort level and energy cost, respectively, and they provided by the residents according to their preferences, considering the constraints that $w_1 + w_2 = 1$, $0 \leq w_i \leq 1$ and $0 \leq w_2 \leq 1$.

**13.** System for implementing the energy management method as defined in any one of the claims 1 to 12, **characterised in that** it comprises:

- energy meters (2) to measure the electric energy consumed by the programmable appliances (12) and the controllable appliances (14), the electric energy stored or recovered in or from the battery storage system (10) respectively, the electric energy generated by the said renewable energy sources (3), particularly said wind turbines (4) and photovoltaics (5), and the electric energy that is absorbed by or provided to the grid (1),
- temperature sensors (17) to measure the indoor temperature of each room of the building,
- controllable power switches (13) to regulate the operation of the programmable appliances (12) and controllable appliances (14), according to said method steps g) and h),
- an inverter (9) of the battery storage system (BSS) that controls the charging and discharging operation of the batteries (11), and it is regulated by control signals ($s_c$) according to said method steps g) and h),
- a controller (16) configured to implement the said energy management method with a human machine interface for the insertion, by the residents, of the acceptable starting and ending time-slots of the programmable appliances (12), according to said method step a), and the acceptable minimum and maximum inside temperatures -according to said method step b).

**14.** System according to claim 13, **characterised in that** the controllable power switches (13) are regulated by control signals of values 0 and 1 provided by the controller (16), and the charging or discharging mode of the batteries (11) is regulated by the inverter (9) of the battery storage system (10) through a control signal ($s_c$) provided by the controller (16).

**Patentansprüche**

1. Verfahren für die Energieverwaltung eines Niedrigstenergiegebäudes (nZEB), das ein Gleichgewicht zwischen den Energieersparniszielen, dem Komfort der Hausbewohner und dem maximalen Nutzen des erzeugten Stroms durch eine Reihe erneuerbarer Energiequellen (RES) (4) durch die Nutzung eines Batteriespeichersystems (BSS) (10) bereitstellt, **dadurch gekennzeichnet, dass** es auf einem genetischen Algorithmus (GAT) basiert, wobei eine Berechnung des Gleichgewichts die folgenden Schritte umfasst, die auf eine Zeitspanne von 24 Stunden im Voraus Bezug nimmt, die in N diskrete Zeitintervalle unterteilt wird:

   a) unter Berücksichtigung einer Auswahl der Bewohner des akzeptablen Anfangs- und Endzeitschlitzes ( $a_{PA}^i$ beziehungsweise $b_{PA}^i$ ) für jedes $i$ Gerät der programmierbaren Geräte (12), werden die Energieverbrauchsvektoren für die programmierbaren Geräte (12) für N Zeitschlitze ($E_{PA}$) geschätzt, wo die programmierbaren Geräte (PAs) Stromabnehmer sind, deren Betriebszeit geplant wird,

   b) unter Berücksichtigung der Auswahl der Bewohner der akzeptablen Mindest- und Höchstinnentemperatur ( $T_{in}^{min}$ beziehungsweise $T_{in}^{max}$ ) des Niedrigstenergiegebäudes (nZEB), werden die Energieverbrauchsvektoren ($E_{CA}$) der steuerbaren Geräte (CAs) (14) für N Zeitschlitze geschätzt, wo die steuerbaren Geräte (14) Stromabnehmer sind, deren Betrieb durch die Temperatur geregelt wird,

   c) für N Zeitschlitze werden die Energieverbrauchsvektoren ($E_{UA}$) der nicht steuerbaren Geräte (UAs) (15) gemeldet ($E_{UA}$), indem Daten genutzt werden, die von Energiemessern erhalten werden, wo die steuerbaren Geräte (15) Stromabnehmer sind, die nicht programmiert werden können und die entweder manuell von den Bewohnern oder automatisch ein-/ausgeschaltet werden und außerdem Geräte sind, die von den Bewohnern nicht gesteuert werden können,

   d) für N Zeitschlitze werden die Energieverbrauchsvektoren ($E_{WT}$ beziehungsweise $E_{PV}$) der Reihe erneuerbarer Energiequellen (3) unter Berücksichtigung meteorologischer Daten geschätzt, die von einem Wetterprognosedienstprogramm erhalten werden, wobei die geschätzte Gesamtenergie, die von den erneuerbaren Energiequellen (3) erzeugt wird, durch $E_{RES} = E_{WT} + E_{PV}$ bestimmt wird,

   e) für N Zeitschlitze werden die Energievektoren ( $E_{BSS}'^{ch}$ beziehungsweise $E_{BSS}'^{dis}$ ) des Batteriespeichersystems (10) für Lade- und Entlademodi geschätzt,

   f) für N Zeitschlitze werden die Strompreisvektoren (EEP$_{buy}$ beziehungsweise EEP$_{sell}$) vom Kauf und Verkauf anhand der geschätzten Kaufs- beziehungsweise Verkaufspreise, die von einem Stromversorger erhalten werden, erstellt,

   g) die Werte der akzeptablen Anfangs- und Endzeitschlitze jedes $i$ Geräts ( $a_{PA}^i$ beziehungsweise $b_{PA}^i$ ) und die akzeptable Mindest- und Höchstinnentemperatur ( $T_{in}^{min}$ beziehungsweise $T_{in}^{max}$ ), die von den Bewohnern in den zuvor genannten Schritten a) und b) bereitgestellt wurden, und die Energievektoren ($E_{WT}$, $E_{PV}$, $E_{PA}$, $E_{CA}$, $E_{UA}$, $E_{BSS}^{ch}$, $E_{BSS}^{dis}$ ) und der Strompreis (EEP), die in den zuvor genannten Schritten b) bis f) berechnet wurden, werden in eine Kostenfunktion (J) importiert und dann wird die Kostenfunktion (J) über den genetischen Algorithmus (GAT) minimiert, wobei die Minimierung für die kommenden N Zeitschlitze Werte für Folgendes ergibt:

   - Steuervektoren der Anfangszeitschlitze für jedes von programmierbaren Geräten (12), der Referenzinnentemperatur und der Lade- oder Entladebetriebsmodi des Batteriespeichersystems (BSS) (10), und
   - einen Wert eines Parameters (x), der Werte von 0 bis 1 aufweisen kann und sicherstellt, dass die von der erneuerbaren Energiequelle (RES) (3) erzeugte und in dem Batteriespeichersystem (10) gespeicherte Energie gleich oder höher als die Energiemenge ist, die den Geräten vom Batteriespeichersystem (10) bereitgestellt wurde, insbesondere wobei (x) gleich 1 gesetzt wird, wenn das Batteriespeichersystem (10) aktiv ist, und gleich 0, wenn das Batteriesystem (10) inaktiv ist,

   h) die Werte, die in Schritt g) berechnet wurden, der:

   - Steuervektoren der Anfangszeitschlitze jedes programmierbaren Geräts (12), wobei die Referenzinnentemperatur für die N Zeitschlitze und die lade- und Entladebetriebsmodi des Batteriespeichersystems (10) für die N Zeitschlitze als Eingangssignale an eine Vorrichtung gespeist werden, die das Energieverwaltungsverfahren umsetzt, während
- die Steuervariable (x) als Eingangsvariable bei der Optimierungsprozedur der nächsten Zeitabtastung verwendet wird, die in Schritt g) umgesetzt wurde.

2. Verfahren nach Anspruch 1, **dadurch gekennzeichnet, dass** die Schritte a) bis g) bzw. h) in der angegebenen Reihenfolge durchgeführt werden.

3. Verfahren nach einem der vorstehenden Ansprüche, **dadurch gekennzeichnet, dass** die Reihe erneuerbarer Energiequellen (RES) (3) aus Windkraftanlagen (WT) (5) bzw. Photovoltaik (PV) (6) besteht, wobei insbesondere

    - die programmierbaren Geräte (PAs) (12) vor allem aus Elektroherd, Waschmaschine, Geschirrspüler, Bügeleisen, Staubsauger bestehen und/oder wobei

    - die steuerbaren Geräte (CAs) (13) aus einer Wärmepumpe und/oder einer Klimaanlage bestehen, und/oder wobei
    - die nicht steuerbaren Geräte (UAs) (15) aus persönlichen Computern, Fernseher, Sicherheitsbeleuchtung und von einem Bewegungssteuerungssystem regulierten Lichtern bestehen.

4. Verfahren zur Energieverwaltung nach einem der vorstehenden Ansprüche 1 bis 3, **dadurch gekennzeichnet, dass** der genetische Algorithmus (GAT) die Anfangszeit ( $t_{PA}^i$ ) jedes programmierbaren Geräts (i-PA) (12) innerhalb der N Zeitschlitze unter Berücksichtigung der Einschränkungen, dass die Anfangszeit ( $t_{PA}^i$ ) größer-gleich dem akzeptablen Anfangszeitschlitz ( $a_{PA}^i$ ), der von den Bewohnern für jedes programmierbare Gerät (i-PA) (12) definiert wurde, und außerdem kleiner-gleich dem akzeptablen Endzeitschlitz ( $b_{PA}^i$ ), der von den Bewohnern für jedes programmierbare Gerät (i-PA) (12) definiert wurde, minus der Dauer des Betriebs der programmierbaren Geräte i-PA (12) ( $LoO_{PA}^i$ ) ist, wobei

$$a_{PA}^i \le t_{PA}^i \le b_{PA}^i - LoO_{PA}^i .$$

5. Verfahren nach einem der vorstehenden Ansprüche 1 bis 4, **dadurch gekennzeichnet, dass** der genetische Algorithmus (GAT) die Referenzinnentemperatur ( $T_{in}^{ref}$ ) für jeden der N Zeitschlitze unter Berücksichtigung der Einschränkung, dass die Referenzinnentemperatur ( $T_{in}^{ref}$ ) größer-gleich der Mindestinnentemperatur ( $T_{in}^{min}$ ) und kleiner-gleich der Höchstinnentemperatur ( $T_{in}^{max}$ ) ist, die von den Bewohnern definiert wurden, wobei $T_{in}^{min} \le T_{in}^{ref} \le T_{in}^{max}$ .

6. Verfahren nach einem der vorstehenden Ansprüche 1 bis 5, **dadurch gekennzeichnet, dass** die Verfügbarkeitskosten ($C_b$) eines Batteriespeichersystems (10) durch das Verhältnis der Ersatzkosten ($C_{rep}$) in Bezug auf die Durchsatzenergiekapazität über die Gesamtlebensdauer ($Q_{bt}$) des Batteriespeichersystems (10) berechnet werden, wobei $C_b = C_{rep}/Q_{bt}$, wo die Kapazität über die Gesamtlebensdauer durch $Q_{bt} = Q_{br} \cdot DoD[0,9L_r - 0,1]$ geschätzt wird, wo DoD die Entladungstiefe ist, das heißt die maximale Entladung in Bezug auf die Nennentladung, und $L_r$ die Nennlebensdauer einer Batterie ist, die aus dem Batteriedatenblatt erhalten wird.

7. Verfahren nach einem der vorstehenden Ansprüche 1 bis 6, **dadurch gekennzeichnet, dass** das Ziel hohen Komforts für die Bewohner dadurch bestimmt wird, dass die Haushaltsgeräte ihre Arbeit so früh wie möglich verrichten, insbesondere wobei der Komfort für die Bewohner berücksichtigt wird, indem die Verzögerungszeitrate (DTR) für jedes i programmierbare Gerät (12) definiert wird, die durch $DTR_{PA}^i = \frac{t_{PA}^i - a_{PA}^i}{b_{PA}^i - (LoO_{PA}^i + a_{PA}^i)}$ vorgegeben wird und Werte zwischen 0 und 1 aufweist, wo der Wert 0 als höchster Komfort für Bewohner in Bezug auf die Priorität, ihre Präferenzen zu erfüllen, definiert ist, während 1 als das niedrigste akzeptable Komfortniveau und damit die niedrigste akzeptable Priorität, die Präferenzen der Bewohner zu erfüllen, definiert ist.

8. Verfahren nach einem der vorstehenden Ansprüche 1 bis 7, **dadurch gekennzeichnet, dass** eine Komfortniveauabnahme für Bewohner ($CLD_{PA}$) in Bezug auf die gesamten programmierbaren Geräte (12) des Niedrigstenergiegebäudes (nZEB) durch $CLD_{PA} = \sum_{i=1}^{M} r^{\left(DTR_{PA}^{1}\right)}$ berechnet wird, wo M die Gesamtanzahl der programmierbaren Geräte (12) ist und *r* eine Ganzzahl größer 1 ist, mit r>1, das durch die Tatsache entschieden wird, dass je höher r ist, eine umso höhere Wichtigkeit dem Komfort der Bewohner bei der Energieverwaltung beigemessen wird.

9. Verfahren nach dem vorstehenden Anspruch 8, **dadurch gekennzeichnet, dass** die Komfortniveauabnahme für Bewohner in Bezug auf das Heizen und Kühlen ($CLD_{H/C}$) durch

$$CLD_{H/C} = \begin{cases} \sum\limits_{k=1}^{N} r^{\left(\frac{T_{in}^{ref}(k)-T_{in}^{max}}{T_{in}^{max}-T_{in}^{min}}\right)} & \text{für den Heizmodus} \\ \sum\limits_{k=1}^{N} r^{\left(\frac{T_{in}^{ref}(k)-T_{in}^{min}}{T_{in}^{max}-T_{in}^{min}}\right)} & \text{für den Kühlmodus} \end{cases},$$

für jeden der Abtastungszyklen k berechnet wird, wo $1 \leq k \leq N$.

10. Verfahren nach dem vorstehenden Anspruch 9, **dadurch gekennzeichnet, dass** die Gesamtkomfortniveauabnahme für die Bewohner ($CLD_{tot}$) durch $CLO_{tot} = CLD_{PA} + CLO_{H/C}$ berechnet wird.

11. Verfahren nach einem der vorstehenden Ansprüche 1 bis 10, **dadurch gekennzeichnet, dass** eine Kostenfunktion $J = w_1 CLD_{tot} + w_2 \left[ F_1\left(E_{ep}\right) + F_2\left(E'_{BSS}^{dis}\right)\right]$ minimiert wird, indem der genetische Algorithmus (GAT) genutzt wird, wobei eine iterative diskrete Berechnungsprozedur für jegliche Abtastungszyklen k angewendet wird, wobei $1 \leq k \leq N$, wo

$$F_1\left(E_{ep}\right) = \sum_{k=1}^{N} \left[\lambda \cdot EEP_{buy}(k) + (1-\lambda) \cdot EEP_{sell}(k)\right] \cdot E_{ep}(k)$$

$$F_2\left(E'_{BSS}^{dis}\right) = \sum_{k=1}^{N} C_b E'_{BSS}^{dis}(k)$$

$$E_{ep} = E_{RES}^{T} - \left(EC_{PA}^{T} + EC_{UA}^{T} + E_{CA}^{T}\right) - x\left(E'_{BSS}^{ch,T} - E'_{BSS}^{dis,T}\right)$$

und

$$\lambda = \begin{cases} 0 & E_p(k) \geq 0 \\ 1 & E_p(k) < 0 \end{cases}$$

unter Berücksichtigung, dass $E_{RES}^{T}, EC_{PA}^{T}, EC_{UA}^{T}, EC_{CA}^{T}, E'_{BSS}^{ch,T}$ beziehungsweise $E'_{BSS}^{dis,T}$ die Transposition der Vektoren ($E_{RES}, EC_{PA}, EC_{UA}, E_{CA}, E'_{BSS}^{ch}$ und $E'_{BSS}^{dis}$) sind und $EEP_{buy}(k), EEP_{sell}(k), E'_{BSS}^{dis}$ und $E_{ep}(k)$ die k-ten Werte der jeweiligen Energievektoren sind.

12. Verfahren nach Anspruch 11, **dadurch gekennzeichnet, dass** die Parameter ($w_1$) und ($w_2$) der Kostenfunktion (J) von zwei gewichteten Faktoren begründet werden, die die Relevanz der Ziele des Komfortniveaus beziehungsweise der Energiekosten darstellen und von den Bewohnern gemäß deren Präferenzen bereitgestellt wurden, unter Berücksichtigung der Einschränkungen, dass $w_1+w_2=1$, $0\leq w_1\leq 1$ und $0\leq w_2\leq 1$.

13. System zum Implementieren des Energieverwaltungsverfahrens wie in einem der Ansprüche 1 bis 12 definiert, **dadurch gekennzeichnet, dass** es Folgendes umfasst:

- Energiemesser (2), um den von den programmierbaren Geräten (12) und den steuerbaren Geräten (14) verbrauchten Strom, den in oder von dem Batteriespeichersystem (10) gespeicherten beziehungsweise rückgewonnenen Strom, den von den erneuerbaren Energiequellen (3), insbesondere den Windkraftanlagen (4) und der Photovoltaik (5), erzeugten Strom und den Strom, der von dem Stromnetz (1) absorbiert oder bereitgestellt wird, zu messen,
- Temperatursensoren (17), um die Innentemperatur jedes Raums des Gebäudes zu messen,
- steuerbare Stromschalter (13), um den Betrieb der programmierbaren Geräte (12) und steuerbaren Geräte (14) gemäß den Verfahrensschritten g) und h) zu regeln,
- einen Wechselrichter (9) des Batteriespeichersystems (BSS), der den Lade- und Entladebetrieb der Batterien (11) steuert und von Steuersignalen ($s_c$) gemäß den Verfahrensschritten g) und h) geregelt wird,
- eine Steuereinheit (16), die dazu konfiguriert ist, das Energieverwaltungsverfahren mit einer Mensch-Maschine-Schnittstelle für die Eingabe, durch die Bewohner, der akzeptablen Anfangs- und Endzeitschlitze der programmierbaren Geräte (12) gemäß dem Verfahrensschritt a) und der akzeptablen Mindest- und Höchstinnentemperaturen gemäß dem Verfahrensschritt b) zu implementieren.

14. System nach Anspruch 13, **dadurch gekennzeichnet, dass** die steuerbaren Stromschalter (13) von Steuersignalen der Werte 0 und 1, die von der Steuereinheit (16) bereitgestellt werden, geregelt werden und der Lade- oder Entlademodus der Batterien (11) vom Wechselrichter (9) des Batteriespeichersystems (10) über ein Steuersignal ($s_c$) geregelt wird, das von der Steuereinheit (16) bereitgestellt wird.

**Revendications**

1. Procédé de gestion d'énergie dans un bâtiment à consommation d'énergie quasi nulle (nZEB) procurant un équilibre entre les objectifs d'économie d'énergie, de confort des résidents du bâtiment et d'exploitation maximale de l'énergie électrique produite par un ensemble de sources d'énergie renouvelables (RES) (4) par l'utilisation d'un système de stockage par batterie (BSS) (10), **caractérisé en ce qu'il** est basé sur un algorithme génétique (GAT) dont le calcul de l'équilibre précité comprend les étapes suivantes, qui se rapportent à une période de 24 heures en amont, qui est divisée en $N$ créneaux horaires discrets :

a) en considérant la sélection par les résidents des créneaux horaires de démarrage et de fin acceptables ($a_{PA}^i$ respectivement $b_{PA}^i$), pour chaque appareil $i$ des appareils programmables (12), les vecteurs de consommation d'énergie pour les appareils programmables (12) sont estimés, pour $N$ créneaux horaires ($E_{PA}$), où lesdits appareils programmables (PA) sont des charges électriques, dont le temps de fonctionnement est planifié,

b) en considérant le choix par les résidents de la température intérieure minimale et maximale acceptable ($T_{in}^{\min}$ respectivement $T_{in}^{\max}$) du bâtiment à consommation d'énergie quasi nulle (nZEB), les vecteurs de consommation d'énergie ($E_{CA}$) des appareils contrôlables (CA) (14) sont estimés, pour $N$ créneaux horaires, où lesdits appareils contrôlables (14) sont des charges électriques dont le fonctionnement est régulé par la température,

c) pour $N$ créneaux horaires, les vecteurs de consommation d'énergie ($E_{UA}$) des appareils incontrôlables (UA) (15) sont rapportés ($E_{UA}$), en utilisant les données obtenues à partir de compteurs d'énergie, où lesdits appareils incontrôlables (15) sont des charges électriques qui ne peuvent pas être programmées et lesquels sont allumés/éteints soit manuellement par les résidents, soit automatiquement, et ce sont également des appareils sur lesquels les résidents n'ont aucune action de contrôle,

d) pour N créneaux horaires, les vecteurs de production d'énergie ($E_{WT}$ respectivement $E_{PV}$) de l'ensemble précité de sources d'énergie renouvelable (3) sont estimés en tenant compte des données météorologiques obtenues par un service de prévision météorologique, dans lequel l'énergie totale estimée produite par lesdites sources d'énergie renouvelable (3) est déterminée par $E_{RES} = E_{WT} + E_{PV}$,

e) pour $N$ créneaux horaires, les vecteurs d'énergie ($E_{BSS}^{rch}$ respectivement $E_{BSS}^{rdis}$) du système de stockage par batterie (10) sont estimés pour les modes de charge et de décharge,

f) pour N créneaux horaires, les vecteurs de prix de l'énergie électrique ($EEP_{buy}$ respectivement $EEP_{sell}$) d'achat

et de vente sont construits à partir des prix d'achat et de vente estimés respectivement, obtenus par un fournisseur d'énergie électrique,

g) les valeurs des créneaux horaires de démarrage et de fin acceptables pour chaque appareil i ( $a_{PA}^{i}$ respectivement $b_{PA}^{i}$ ), ainsi que les températures intérieures minimale et maximale acceptables ( $T_{in}^{min}$ respectivement $T_{in}^{max}$ ) fournies par les résidents aux étapes a) et b) susmentionnées et les vecteurs d'énergie ($E_{WT}$, $E_{PV}$, $E_{PA}$, $E_{CA}$, $E_{UA}$, $E_{BSS}^{ch}$, $E_{BSS}^{dis}$ ) et le prix de l'énergie électrique précité (EEP), qui sont calculés aux étapes b) à f) susmentionnées, sont importés dans une fonction de coût (J), puis cette fonction de coût (J) est minimisée par l'algorithme génétique (GAT), ladite minimisation donnant, pour les N créneaux horaires en amont des valeurs:

- des vecteurs de commande des créneaux horaires de démarrage de chaque appareil programmable (12), la température intérieure de référence, et les modes de fonctionnement de charge ou de décharge du système de stockage de batterie (BSS) (10), et
- la valeur d'un paramètre (x), qui peut prendre les valeurs 0 et 1, et qui assure que l'énergie produite par les sources d'énergie renouvelables (RES) (3) et stockée dans ledit système de stockage de batterie (10) est égale ou supérieure à la quantité d'énergie qui a été fournie aux appareils par ledit système de stockage de batterie (10), en particulier où (x) est égal à 1 lorsque ledit système de stockage de batterie (10) est actif et à 0 lorsque ledit système de stockage de batterie (10) est inactif,

h) les valeurs, qui sont calculées à l'étape g), de :

- vecteurs de commande des créneaux horaires de démarrage de chaque appareil programmable (12), les températures intérieures de référence pour les *N* les créneaux horaires et les modes de fonctionnement de charge ou de décharge dudit système de stockage de batterie (10) pour les N créneaux horaires sont fournis comme signaux d'entrée à un dispositif qui met en œuvre le procédé de gestion de l'énergie, tandis que
- la variable de commande (x) est utilisée comme variable d'entrée dans la procédure d'optimisation lors du prochain échantillonnage suivant, qui est réalisé à l'étape g).

2. Procédé selon la revendication 1, **caractérisé en ce que** lesdites étapes a) à g) resp. h) sont effectuées dans l'ordre indiqué.

3. Procédé selon l'une quelconque des revendications précédentes, **caractérisé en ce que** ledit ensemble de sources d'énergie renouvelables (SER) (3) consiste en éoliennes (WT) (5), respectivement en panneaux photovoltaïques (PV) (6), en particulier dans lequel

- lesdits appareils programmables (PAs) (12) consistent notamment en une cuisinière électrique, un lave-linge, un lave-vaisselle, un fer à repasser, un aspirateur et/ou dans lequel
- lesdits appareils contrôlables (CAs) (13) consistent en une pompe à chaleur et/ou un climatiseur, et/ou dans lequel
- lesdits appareils incontrôlables (UAs) (15) consistent en ordinateurs personnels, téléviseurs, éclairage de sécurité et

des lumières régulées par un système de contrôle de mouvement.

4. Procédé de gestion de l'énergie selon l'une quelconque des revendications 1 à 3 précédentes, **caractérisé en ce que** l'algorithme génétique (GAT) recherche l'heure de démarrage ( $t_{PA}^{i}$ ) de chaque appareil programmable (*i* PA) (12), dans les *N* créneaux horaires, compte tenu des contraintes selon lesquelles l'heure de démarrage ( $t_{PA}^{i}$ ) est supérieure ou égale au créneau horaire de démarrage acceptable ( $a_{PA}^{i}$ ), qui est défini par les résidents pour chaque appareil programmable (*i*-PA) (12), et également, inférieure ou égale au créneau horaire de fin acceptable ( $b_{PA}^{i}$ ), défini par les résidents pour chaque appareil programmable (*i*-PA) (12), moins la durée de fonctionnement des appareils programmables i-PA (12) ( $\mathrm{LoO}_{PA}^{i}$ ), dans lequel $a_{PA}^{i} \le t_{PA}^{i} \le b_{PA}^{i} - \mathrm{LoO}_{PA}^{i}$ .

5. Procédé selon l'une quelconque des revendications 1 à 4 précédentes, **caractérisé en ce que** ledit algorithme génétique (GAT) recherche la température intérieure de référence ( $T_{in}^{ref}$ ) pour chacun des *N* créneaux horaires en tenant compte de la contrainte selon laquelle ladite température intérieure de référence ( $T_{in}^{ref}$ ) est égale ou supérieure à la température intérieure minimale ( $T_{in}^{\min}$ ) et égale ou inférieure à la température intérieure maximale ( $T_{in}^{\max}$ ), qui sont définies par les résidents, dans lequel $T_{in}^{\min} \leq T_{in}^{ref} \leq T_{in}^{\max}$ .

6. Procédé selon l'une quelconque des revendications 1 à 5 précédentes, **caractérisé en ce que** le coût de disponibilité ($C_b$) d'un système de stockage de batterie (10) est calculé par le rapport du coût de remplacement ($C_{rep}$) par rapport à la capacité énergétique totale de cyclage ($Q_{bt}$) du système de stockage de batterie (10), où $C_b = C_{rep}/Q_{bt}$, la capacité totale sur la durée de vie est estimée par $Q_{bt} = Q_{br} \cdot DoD[0,9L_r - 0,1]$, où DoD, est la profondeur de décharge, c'est-à-dire la décharge maximale par rapport à la capacité nominale, et $L_r$ est la durée de vie nominale d'une batterie obtenue à partir de la fiche technique de la batterie.

7. Procédé selon l'une quelconque des revendications 1 à 6 précédentes, **caractérisé en ce que** l'objectif d'un confort élevé des résidents est déterminé **en ce que** les appareils électroménagers terminent leur travail le plus rapidement possible, en particulier dans lequel le confort des résidents est pris en compte en définissant le taux de retard (DTR) pour chaque appareil programmable i (12) qui est donné par $\mathrm{DTR}_{PA}^{i} = \dfrac{t_{PA}^{i} - a_{PA}^{i}}{b_{PA}^{i} - (\mathrm{LoO}_{PA}^{i} + a_{PA}^{i})}$ et prend des valeurs entre 0 et 1, où la valeur 0 est définie comme un confort élevé des résidents par rapport à la priorité accordée à la satisfaction de leurs préférences, tandis que la valeur 1 est définie comme le niveau de confort acceptable inférieur et donc la priorité acceptable inférieure pour satisfaire les préférences des résidents.

8. Procédé selon l'une quelconque des revendications 1 à 7 précédentes, caractérisé en que la dégradation du niveau de confort des résidents (CLD$_{PA}$) par rapport au nombre total d'appareils programmables (12) du bâtiment à énergie quasi nulle (nZEB) est calculée par $\mathrm{CLD}_{PA} = \sum\limits_{i=1}^{M} r^{(\mathrm{DTR}_{PA}^{i})}$ où *M* est le nombre total d'appareils programmables (12) et *r* est un entier supérieur à 1, où *r* > 1 ce qui est décidé par le fait que, au plus élevé est *r*, au plus grande est l'importance accordée au confort des résidents dans la gestion de l'énergie.

9. Procédé selon la revendication 8 précédente, caractérisé en que la dégradation du niveau de confort des résidents en ce qui concerne le chauffage et la climatisation (CLD$_{H/C}$) est calculée par

$$CLD_{H/C} = \begin{cases} \sum\limits_{k=1}^{N} r^{\left(\frac{T_{in}^{ref}(k) - T_{in}^{max}}{T_{in}^{max} - T_{in}^{min}}\right)} & \text{pour le mode chauffage} \\ \sum\limits_{k=1}^{N} r^{\left(\frac{T_{in}^{ref}(k) - T_{in}^{min}}{T_{in}^{max} - T_{in}^{min}}\right)} & \text{pour le mode refroidissement} \end{cases}$$

pour tout cycle d'échantillonnage *k,* où $1 \leq k \leq N$.

10. Procédé selon la revendication 9 précédente, caractérisé en que la dégradation totale du niveau de confort des résidents (CLD$_{tot}$) est calculée par CLD$_{tot}$ = CLD$_{PA}$ + CLD$_{H/C}$.

11. Procédé selon l'une quelconque des revendications 1 à 10 précédentes, caractérisé en qu'une fonction de coût $J = w_1 \mathrm{CLD}_{tot} + w_2 \left[ F_1(E_{ep}) + F_2(E_{BSS}^{rdis}) \right]$ est minimisée grâce à l'utilisation dudit algorithme génétique (GAT), dans lequel une procédure de calcul discret itérative est appliquée pour chaque cycle d'échantillonnage *k,* où $1 \leq k \leq N$, où

$$F_1(E_{ep}) = \sum_{k=1}^{N} [\lambda \cdot EEP_{buy}(k) + (1-\lambda) \cdot EEP_{sell}(k)] E_{ep}(k)$$

$$F_2(E_{BSS}^{\prime dis}) = \sum_{k=1}^{N} C_b E_{BSS}^{\prime dis}(k)$$

$$E_{ep} = E_{RES}^{T} - (EC_{PA}^{T} + EC_{UA}^{T} + E_{CA}^{T}) - x(E_{BSS}^{\prime ch,T} - E_{BSS}^{\prime dis,T}) \text{ et}$$

$$\lambda = \begin{cases} 0 & E_{ep}(k) \geq 0 \\ 1 & E_{ep}(k) < 0 \end{cases}$$

considérant que le $E_{RES}^{T}$, $EC_{PA}^{T}$, $EC_{UA}^{T}$, $E_{CA}^{T}$, $E_{BSS}^{\prime ch,T}$ and $E_{BSS}^{\prime dis,T}$ sont la transposition des vecteurs( $E_{RES}$, $EC_{PA}$, $EC_{UA}$, $E_{CA}$, $E_{BSS}^{\prime ch}$ and $E_{BSS}^{\prime dis}$ ) respectivement, et le

$EEP_{buy}(k)$, $EEP_{sell}(k)$, $E_{BSS}^{\prime dis}$ , and $E_{ep}(k)$ sont les $k$ - ièmes valeurs des vecteurs d'énergie respectifs.

**12.** Procédé selon la revendication 11, caractérisé en que les paramètres ($w_1$) et ($w_2$) de la fonction de coût (J) sont constitués de deux facteurs pondérés qui représentent respectivement l'importance des objectifs de niveau de confort et de coût énergétique, et ils sont fournis par les résidents selon leurs préférences, en tenant compte des contraintes que $w_1 + w_2 = 1$, $0 \leq w_1 \leq 1$ et $0 \leq w_2 \leq 1$.

**13.** Système de mise en œuvre du procédé de gestion de l'énergie tel que défini dans l'une quelconque des revendications 1 à 12, **caractérisé en ce qu'**il comprend :

  - des compteurs d'énergie (2) pour mesurer l'énergie électrique consommée par les appareils programmables (12) et les appareils contrôlables (14), l'énergie électrique stockée ou récupérée dans ou à partir du système de stockage par batterie (10) respectivement, l'énergie électrique produite par lesdites sources d'énergie renouvelables (3), en particulier lesdites éoliennes (4) et photovoltaïques (5), et l'énergie électrique qui est absorbée par ou fournie au réseau (1),
  - des capteurs de température (17) pour mesurer la température intérieure de chaque pièce du bâtiment,
  - des interrupteurs de puissance contrôlables (13) pour réguler le fonctionnement des appareils programmables (12) et des appareils contrôlables (14), conformément auxdites étapes g) et h) du procédé susmentionné).
  - un onduleur (9) du système de stockage de batterie (BSS) qui contrôle le fonctionnement de charge et de décharge des batteries (11), et il est régulé par des signaux de commande ($s_c$) selon les étapes g) et h) du procédé susmentionné.
  - un contrôleur (16) configuré pour mettre en œuvre le procédé de gestion de l'énergie susmentionné, avec une interface homme-machine permettant aux occupants de saisir les plages horaires de début et de fin acceptables pour les appareils programmables (12), conformément à l'étape du procédé susmentionné a), et les températures intérieures minimales et maximales acceptables selon ladite étape b) du procédé.

**14.** Système selon la revendication 13, **caractérisé en ce que** les commutateurs de puissance contrôlables (13) sont régulés par des signaux de commande de valeurs 0 et 1 fournis par le contrôleur (16), et le mode de charge ou de décharge des batteries (11) est régulé par l'onduleur (9) du système de stockage de batterie (10) par l'intermédiaire d'un signal de commande ($s_c$) fourni par le contrôleur (16).

Fig. 1

Fig. 1a

1 day (or 1440 min)

| 1st | 2nd | 3rd | 4th | | | | (N-3)th | (N-2)th | (N-1)th | Nth |
|-----|-----|-----|-----|---|---|---|---------|---------|---------|-----|
| 0/1 | 0/1 | 0/1 | 0/1 | ■ | ■ | ■ | 0/1 | 0/1 | 0/1 | 0/1 |

(1440/N) min

Fig. 2

Initial population of
$t_{PA}$, $t_{ch}$, $t_{dis}$ and $x$

Calculation of RES power generation
from eq. (8) and appliances energy demand
from eqs. (15), (16) and (27)

weather forcasting

users' preferences

Calculation of the cost/fitness
function $J$ through eq. (29)

GA: Individual Selection-
Crossover-Mutation

No ← Gen. Num=Max

Yes

Best Solution
for Fitness/Cost Function

Fig. 3

Fig. 3a

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 106439993
- US 20170167747 A1
- US 20170176964 A1
- WO 2013163202 A1
- US 20130238294 A1
- WO 2015084285 A1
- US 20160334825 A1
- EP 3413421 A1
- EP 3457513 A1

### Non-patent literature cited in the description

- **A. MOLDERINK et al.** Domestic energy management methodology for optimizing efficiency in smart grids. *Proc. IEEE Conf. Power Technol., Bucharest*, June 2009
- **A. MOHSENIAN-RAD et al.** Optimal residential load control with price prediction in real-time electricity pricing environments. *IEEE Trans. Smart Grid*, 2010, vol. 1 (2), 120-133
- **GIUSTI et al.** Restricted neighborhood communication improves decentralized demand-side load management. *IEEE Trans. Smart Grid*, 2014, vol. 5 (1), 92-101
- **A.H. MOHSENIAN-RAD et al.** Autonomous demand-side management based on game-theoretic energy consumption scheduling for the future smart grid. *IEEE Trans. Smart Grid*, 2010, vol. 1 (3), 320-331
- **P. CHAVALI et al.** A distributed algorithm of appliance scheduling for home management system. *IEEE Trans. Smart Grid*, 2014, vol. 5 (1), 282-290
- **B. SUN et al.** Building Energy Management: Integrated Control of Active and Passive Heating, Cooling, Lighting, Shading, and Ventilation Systems. *IEEE Trans. on Autom. Science and Eng.*, 2013, vol. 10 (3), 588-602
- **Z. ZHAO et al.** An optimal power scheduling method for demand response in home energy management system. *IEEE Trans. Smart Grid*, 2013, vol. 4 (2), 1391-1400
- **J. S. HEO et al.** Multiobjective control of power plants using particle swarm optimization techniques. *IEEE Trans. Energy Convers.*, 2006, vol. 21 (2), 552-561
- **M. INOUE et al.** Network architecture for home energy management system. *IEEE Trans. Consum. Electron.*, 2003, vol. 49 (3), 606-613
- **K.RUSHIKESH BABU et al.** Implementation of net zero energy building (NZEB) prototype with renewable energy integration. *IEEE Conf. TENSYMP*, July 2017, 1-5